# EUROPEAN PATENT APPLICATION

(11) **EP 4 534 724 A1**
(43) Date of publication of application: **09.04.2025**
(21) Application number: 23811753.5
(22) Date of filing: 19.05.2023
(51) Int. Cl.: C23F 11/12, C23F 11/14, A01P 3/00, A01N 25/02, A01N 59/08

(54) **RUST PREVENTATIVE FOR HYPOCHLOROUS ACID AQUEOUS SOLUTION, FUNGICIDE AND METHOD FOR PREPARING SAME**

(30) Priority: 25.05.2022 JP 2022085152
(71) Applicant: Tokuyama Dental Corporation, Tokyo 110-0016 (JP)
(72) Inventor: FUKAYA, Keisuke, Tokyo 110-0016 (JP); TAKAHASHI, Ayumi, Tokyo 110-0016 (JP)
(74) Representative: Gulde & Partner
(86) International application number: PCT/JP2023/018736
(87) International publication number: WO 2023/228881

(57) **Abstract**

The present invention provides a rust preventative for hypochlorous acid aqueous solution to impart a rust preventative effect to hypochlorous acid aqueous solution, wherein the rust preventative for hypochlorous acid aqueous solution is characterized in that a first active ingredient comprising a metal salt of a carboxylic acid containing 1-9 carbon atoms in the molecule and a second active ingredient comprising a compound having a triazole skeleton are contained in proportions such that the ratio mA/mB of the weight of the first active ingredient mA (mass parts) and the weight of the second active ingredient mB (mass parts) falls within the range of 0.05-200.

## Description

### Technical Field

The present invention relates to a corrosion inhibitor for a hypochlorous acid aqueous solution, a disinfectant, and a method for preparing the same.

### Background Art

The presence form of hypochlorous acid in an aqueous solution changes depending on the pH. Since the dissociation constant pKa of hypochlorous acid at 25°C is 7.53, the ratio of the molecular type hypochlorous acid (HClO) (Hereinafter, it is also referred to as "molecular type hypochlorous acid".) and hypochlorite ion (OCl⁻) (Hereinafter, it is also referred to as "ion type hypochlorous acid".) is 1:1 at pH=7.5. That is, the existence proportion of the molecular type hypochlorous acid (HClO) increases when the pH is inclined to the acidic side than the pH, and the existence proportion of the hypochlorite ion (OCl⁻) increases when the pH is inclined to the alkaline side. Specifically, most hypochlorous acid (HClO) exists as a molecular type hypochlorous acid (HClO) in a weakly acidic region at a pH of about 3 to 6 (the hypochlorous acid aqueous solution in this pH region is particularly referred to as weakly acidic hypochlorous acid water), and most hypochlorous acid ions (OCl⁻) exist in a basic region at a pH of 9 or more. In a strongly acidic region (for example, pH less than 3), chlorine molecules (Cl₂) are generated predominantly as the pH decreases.

Among these existing forms, the molecular type hypochlorous acid (HClO) has an extremely high disinfection effect, and the disinfection effect is said to be about 80 times that of hypochlorite ion (OCl⁻). Weakly acidic hypochlorous acid water having a pH of 3 to 6 and containing a large amount of molecular type hypochlorous acid having such a high disinfection effect has relatively high safety for the human body, and therefore is used as a biocide or a disinfectant in various fields such as medical care, dentistry, agriculture, and food processing (See Patent Literatures 1, 2, and 3 and Non Patent Literature 1.).

However, chlorine-based biocides and disinfectants are known to be metal-corrosive, and the same known to hypochlorous acid. Furthermore, as compared with a hypochlorite (ion type hypochlorous acid) aqueous solution such as sodium hypochlorite having a high pH, the molecular type hypochlorous acid aqueous solution has high corrosiveness, and corrodes the metal at a lower concentration in a shorter time. In order to solve such a problem of metal corrosion of ion type hypochlorous acid and molecular type hypochlorous acid (both are collectively referred to as hypochlorous acid), there has been proposed a disinfecting cleaning agent to which a corrosion inhibitor composed of an organic acid and a salt thereof or an inorganic corrosion inhibitor is added or a disinfecting cleaning agent to which a buffering agent is added.

For example, Patent Literature 4 discloses "A disinfectant composition including: one or more (A) selected from hypochlorous acid and an alkali metal hypochlorite; one or more (B) selected from a polyhydric alcohol derivative surfactant, a cationic surfactant, and an amphoteric surfactant; one or more (C) selected from an organic acid and a salt thereof; and a corrosion inhibitor (D)"., and it is described that the corrosion inhibitor is one or more selected from phosphoric acid, polyphosphoric acid, phosphonic acid, and salts thereof.

Further, Patent Literature 5 describes "An aqueous disinfectant composition including (a) one or more components that liberate hypochlorous acid or hypochlorous acid in water, and (b) a buffering agent, wherein the aqueous disinfectant composition has an effective chlorine concentration of 0.0001 to 12% at the time of use". Patent Literature 5 describes that corrosion of a metal can be effectively suppressed by blending a buffering agent into a hypochlorous acid-based aqueous solution which has been conventionally used as a disinfectant 5 mol times or more with respect to a molar equivalent value of an effective chlorine concentration, and salts of an organic acid and an organic acid, particularly, alkali metal salts of acetic acid and/or acetic acid are preferable as the buffering agent.

### Citation List

### Patent Literature

Patent Literature 1: JP 2019-202907 A
Patent Literature 2: JP 2000-109887 A
Patent Literature 3: JP 2010-138101 A
Patent Literature 4: JP 2002-161011 A
Patent Literature 5: WO 2006/057311 A1

### Non Patent Literature

Non Patent Literature 1: Satoshi Fukuzaki, "Ziaensosannokagaku (Science of hypochlorous acid)", published by Yoneda Publishing Co., Ltd., 2012 p17-22

### Summary of Invention

### Technical Problem

The inorganic corrosion inhibitor used in Patent Literature 4, such as phosphoric acid or polyphosphoric acid, exerts a corrosion-inhibiting effect, that is, an effect of suppressing generation of corrosion on a metal surface in contact with the metal by depositing a metal salt on the metal surface to form a film. However, when such a corrosion inhibitor is used, there are a problem that corrosion is partially generated due to unevenness of the film and a problem that deposits remain on the metal surface even after water washing. On the other hand, it has become apparent from the study of the present inventors that the buffering agent such as acetic acid and/or an alkali metal salt of acetic acid used for imparting the corrosion-inhibiting effect in Patent Literature 5 has an effect of suppressing the generation of corrosion for a corrosion-resistant metal such as stainless steel (SUS), but the corrosion-inhibiting effect for a corrosion-prone metal such as steel is not sufficient.

In addition, the hypochlorous acid aqueous solution-based disinfectant composition needs to maintain an effective chlorine concentration at the time of preparation for at least about several hours after preparation, and from the viewpoint of safety at the time of handling, it is desirable that the disinfectant composition has pH that is neutral or very close to neutral.

Therefore, an object of the present invention is to provide a corrosion inhibitor for a hypochlorous acid aqueous solution used for preparing a hypochlorous acid aqueous solution-based disinfectant composition, which exhibits a corrosion-inhibiting effect of suppressing the generation of corrosion on the metal surface in contact even when the hypochlorous acid aqueous solution to which the corrosion inhibitor is added is used for an article having a surface made of a corrosion-prone metal such as steel, and can maintain the effective chlorine concentration at the time of preparation for about several hours after preparation, and can maintain the aqueous solution at pH that is neutral or very close to neutral.

### Solution to Problem

The present invention solves the above problems, and a first embodiment of the present invention is a corrosion inhibitor for a hypochlorous acid aqueous solution for imparting a corrosion-inhibiting effect to a hypochlorous acid aqueous solution, the corrosion inhibitor including:
a first active component composed of a metal salt of a carboxylic acid having 1 to 9 carbon atoms contained in a molecule and a second active component composed of a compound having a triazole skeleton at a ratio such that the ratio: m_{A}/m_{B} of an amount of the first active component: m_{A} (parts by mass) to an amount of the second active component: m_{B} (parts by mass) is within a range of 0.05 to 200.

In the corrosion inhibitor for a hypochlorous acid aqueous solution (Hereinafter, it is also referred to as the "corrosion inhibitor for a hypochlorous acid aqueous solution of the present invention".) according to the above embodiment, the first active component is preferably composed of at least one selected from the group consisting of a metal salt of formic acid, a metal salt of acetic acid, a metal salt of propionic acid, a metal salt of hexanoic acid, a metal salt of nonanoic acid, a metal salt of butyric acid, and a metal salt of succinic acid. In addition, the second active component is preferably composed of at least one compound selected from the group consisting of benzotriazole, 4-methylbenzotriazole, 5-methylbenzotriazole, 1,2,3-triazole, and 1,2,4-triazole.

A second embodiment of the present invention is a disinfectant being composed of a hypochlorous acid aqueous solution having an effective chlorine concentration of 2 to 2000 ppm by mass and a pH of 5.5 to 7.5; and the disinfectant including:
a metal salt of a carboxylic acid having 1 to 9 carbon atoms contained in a molecule and a compound having a triazole skeleton, wherein when the effective chlorine concentration in the disinfectant is C_{EC} (ppm by mass), the concentration of the metal salt of a carboxylic acid is C_{A} (ppm by mass), and the concentration of the compound having a triazole skeleton is C_{B} (ppm by mass), C_{A}/C_{EC} is 2.5 to 200 and C_{B}/C_{EC} is 1 to 60 (Hereinafter, it is also referred to as a "disinfectant of the present invention".).

A third embodiment of the present invention is a method for preparing the disinfectant of the present invention, the method including:
a dilution step of diluting, with water or an aqueous solvent, a stock solution composed of a hypochlorous acid aqueous solution which has an effective chlorine concentration higher than the effective chlorine concentration of the disinfectant which is a target product, has a pH of 3.0 to 7.5, and does not contain a metal carboxylate and a compound having a triazole skeleton,
wherein the corrosion inhibitor for a hypochlorous acid aqueous solution of the present invention is added so that the C_{A}/C_{EC} is within a range of 2.5 to 200 and the C_{B}/C_{EC} is within a range of 1 to 60 at the time of dilution in the dilution step (Hereinafter, it is also referred to as "preparation method of the present invention".).

### Advantageous Effects of Invention

The corrosion inhibitor for a hypochlorous acid aqueous solution of the present invention can impart a corrosion-inhibiting effect to the hypochlorous acid aqueous solution by blending the corrosion inhibitor. In addition, the obtained corrosion-inhibiting effect is higher than that when a buffering agent such as acetic acid and/or an alkali metal salt of acetic acid is added, and even when used for an article having a surface made of a corrosion-prone metal such as steel, it is also possible to effectively suppress generation of corrosion on the metal surface in contact with the article. Furthermore, the effective chlorine concentration at the time of preparation can be maintained for at least about several hours after the corrosion inhibitor for a hypochlorous acid aqueous solution of the present invention is added to the hypochlorous acid aqueous solution, and furthermore, the aqueous solution can be maintained at pH that is neutral or very close to neutral.

In general, from the viewpoint of stability when stored for a long period of time (prevention of decrease in effective chlorine concentration), space saving of a storage space, and the like, hypochlorous acid aqueous solution-based disinfectant compositions are used by diluting a hypochlorous acid aqueous solution having a high effective chlorine concentration, which is a hypochlorous acid aqueous solution that can be stored in a state of having a high effective chlorine concentration (Hereinafter, it is also referred to as a "stock solution" or a "concentrated stock solution".), so as to have a predetermined concentration at the time of use, that is, prepared (Such preparation for each time you need it is referred to as "As-needed preparation".) so as to be a desired disinfectant on business.

The corrosion inhibitor for a hypochlorous acid aqueous solution of the present invention is extremely effective as a corrosion inhibitor for a hypochlorous acid aqueous solution to be used for as-needed preparing a hypochlorous acid aqueous solution-based disinfectant composition having a corrosion-inhibiting effect, because two kinds of active components are mixed in advance at a predetermined blending ratio so as to exhibit the above effect, and an active component composed of these mixtures can be stably stored in a high concentration state for a long period of time. That is, by the extremely simple method of blending a small amount at the time of dilution in the above as-needed preparation (that is, the method of adjusting the disinfectant of the present invention), the effective chlorine concentration effective for disinfection can be maintained at least for about several hours immediately after the preparation, and the disinfectant of the present invention having the characteristic of having pH that is neutral or very close to neutral to handle can be easily prepared.

### Description of Embodiments

The present invention has been made based on the knowledge that "By adding a metal salt of a carboxylic acid to weakly acidic hypochlorous acid water, a corrosion-inhibiting effect can be imparted, and a decrease in pH can also be prevented." and the knowledge that "The corrosion-inhibiting effect of the metal carboxylate can be further improved by adding a compound having a triazole skeleton to weakly acidic hypochlorous acid water." obtained through the study of the present inventors.

The reason why the above effect can be obtained is not clear, and the present invention is not bound by logic at all, but the present inventors estimate the following reason.

That is, as a mechanism of the present invention, a carboxylic acid anion is adsorbed on a metal surface to form a corrosion preventive film. Furthermore, it is presumed that a metal ion oxidized by hypochlorous acid and generated from a metal surface and a compound having a triazole skeleton form a polycomplex, thereby forming a stronger corrosion preventive film and exhibiting an excellent corrosion-inhibiting effect.

Hereinafter, the corrosion inhibitor for a hypochlorous acid aqueous solution of the present invention, the method for preparing the disinfectant of the present invention, and the disinfectant of the present invention is described in detail. In the present specification, the expression of x to y means a numerical value of x or more and a numerical value of y or less, and when a unit is attached only to y, x also has the same unit.

### 1. Corrosion inhibitor for hypochlorous acid aqueous solution of present invention

The corrosion inhibitor for a hypochlorous acid aqueous solution of the present invention is a corrosion inhibitor for a hypochlorous acid aqueous solution that imparts a corrosion-inhibiting effect of suppressing generation of corrosion on a metal surface in contact with the hypochlorous acid aqueous solution. As described above, a hypochlorous acid aqueous solution-based disinfectant composition is often prepared and used as-needed preparation by diluting a concentrated stock solution with water. The corrosion inhibitor for a hypochlorous acid aqueous solution of the present invention is an additive that is supposed to be added and used at the time of dilution at the time of such an as-needed preparation, and is itself packaged independently (filled in a container or the like), commercialized, and provided for distribution.

Further, in the corrosion inhibitor for a hypochlorous acid aqueous solution of the present invention, the active component, that is, the component contributing to corrosion prevention is a first active component (It is also referred to as "component A".) composed of a metal salt of a carboxylic acid having 1 to 9 carbon atoms contained in the molecule; and a second active component (It is also referred to as "component B".) composed of a compound having a triazole skeleton; wherein a ratio m_{A}/m_{B} of an amount m_{A} (parts by mass) of the first active component to an amount m_{B} (parts by mass) of the second active component is within a range of 0.05 to 200.

The m_{A}/m_{B} is preferably within a range of 0.1 to 150, within a range of 0.1 to 60, and particularly preferably within a range of 0.3 to 15 for the reason that the effective chlorine concentration is maintained for a long time and a sufficient corrosion-inhibiting effect is exhibited. The corrosion inhibitor for a hypochlorous acid aqueous solution of the present invention may be composed of only the active component, but is preferably an aqueous solution from the viewpoint of ease of handling, and the concentration of the component A is preferably 0.2 mass% to 6 mass%, and the concentration of the component B is preferably 0.1 ppm by mass to 2 mass%.

Hereinafter, the hypochlorous acid aqueous solution, the active component, and the like to which the corrosion inhibitor for a hypochlorous acid aqueous solution of the present invention is applied is described in detail.

### 1-1. Hypochlorous acid aqueous solution

The hypochlorous acid aqueous solution to which the corrosion inhibitor for a hypochlorous acid aqueous solution of the present invention is to be applied is not particularly limited as long as it is an aqueous solution in which molecular type hypochlorous acid (HClO) is dissolved, and ion type hypochlorous acid or chlorine may coexist to be dissolved, but it is preferably an aqueous solution in which 50% or more of the effective chlorine concentration is molecular type hypochlorous acid from the viewpoint of safety and the strength of disinfecting power per effective chlorine concentration. As described above, the existence form of effective chlorine in hypochlorous acid water depends on the pH of the aqueous solution, and various existence proportions are almost uniquely determined by the pH. Therefore, when a hypochlorous acid aqueous solution suitable as an application target is defined by the pH, the hypochlorous acid aqueous solution is preferably applied to a hypochlorous acid aqueous solution having a pH of 3.0 to 7.5, particularly a pH of 3.5 to 7.2.

The effective chlorine concentration of the hypochlorous acid aqueous solution to be applied is preferably 2 to 2000 ppm by mass from the viewpoint of a disinfection effect and a corrosion-inhibiting effect. When the effective chlorine concentration is less than 2 ppm by mass, it tends to be difficult to obtain a sufficient disinfection effect, and when the effective chlorine concentration is more than 2000 ppm by mass, the disinfection effect is saturated, and it is further difficult to obtain a further corrosion-inhibiting effect. From the viewpoint of disinfection efficiency, the effective chlorine concentration is preferably 10 to 1500 ppm by mass, and more preferably 30 to 1000 ppm by mass.

The effective chlorine concentration (ppm by mass) means a total chlorine equivalent concentration of chlorine molecules dissolved in an aqueous solution, a chlorine compound having oxidizing power (for example, molecular type hypochlorous acid), and a chlorine atom-containing ion having oxidizing power (for example, ion type hypochlorous acid), and more specifically means a concentration obtained by converting a mass-based concentration of each component into a mass-based chlorine concentration and then summing them. In the present invention, as the effective chlorine concentration, a concentration measured by an absorptiometry with an iodine reagent is adopted, and for example, the effective chlorine concentration can be measured using an effective chlorine concentration measuring kit AQ-202 model (SIBATA SCIENTIFIC TECHNOLOGY LTD.).

Such molecular type hypochlorous acid water can be produced, for example, by an electrolytic method in which a sodium chloride aqueous solution is electrolyzed, a hydrochloric acid method in which hydrochloric acid is added to a basic hypochlorite aqueous solution, or an ion exchange method in which a raw material aqueous solution including a hypochlorite aqueous solution is treated with an ion exchange resin.

### 1-2. First active component (component A)

The corrosion inhibitor for a hypochlorous acid aqueous solution of the present invention uses, as one of the active components, the component A composed of a metal carboxylate having 1 to 9 carbon atoms: n contained in the molecule. The number of carbon atoms: n represents the number of all the carbon atoms contained in the carboxylic acid molecule including the carbon atom of the carboxyl group.

From the viewpoint of the corrosion-inhibiting effect, it is preferable to use a metal carboxylate in which n is 2 to 6 as the component A. Examples of the carboxylic acid that can be suitably used include formic acid, acetic acid, propionic acid, butyric acid, hexanoic acid, succinic acid, and nonanoic acid.

The metal constituting the salt is not particularly limited, and for example, sodium, potassium, calcium, magnesium, strontium, zinc, or the like can be used. From the viewpoint of the stability of the corrosion-inhibiting effect, it is preferable to select a divalent or higher multivalent metal, and from the viewpoint of safety and handling, it is particularly preferable to use an alkaline earth metal such as calcium or magnesium.

Specific examples of the metal carboxylate particularly suitably used as the component A include sodium formate, calcium acetate, magnesium acetate, calcium propionate, sodium hexanoate, and sodium nonanoate, and calcium acetate, magnesium acetate, and calcium propionate are particularly preferable. A plurality of these metal carboxylates may be used in combination.

### 1-3. Second active component (component B)

The corrosion inhibitor for a hypochlorous acid aqueous solution of the present invention uses a compound having a triazole skeleton as the other active component. As the compound having a triazole skeleton, for example, benzotriazole, 4-methylbenzotriazole, 5-methylbenzotriazole, 1,2,3-triazole, 1,2,4-triazole, and the like can be used. Among them, benzotriazole derivatives are preferable because it is difficult to reduce the effective chlorine concentration, and among them, benzotriazole, 4-methylbenzotriazole, and 5-methylbenzotriazole are more preferably used. A plurality of these compounds having a triazole skeleton may be used in combination.

### 1-4. Other optional components

The corrosion inhibitor for a hypochlorous acid aqueous solution of the present invention may contain, as an optional component, a surfactant, a thickener, a foaming agent, a fluorescent agent, a colorant, and the like in addition to the first and second active components, and water or a water-soluble organic solvent as a solvent to be used as necessary. The blending amount thereof may be appropriately determined according to the purpose as long as it does not adversely affect the corrosion-inhibiting effect or when used by being mixed with the hypochlorous acid aqueous solution.

### 2. Disinfectant of present invention

The disinfectant means a disinfectant for killing or removing (disinfecting or removing bacteria) microorganisms such as bacteria attached to an article. As long as the cleaning agent has such a function, the cleaning agent may be called another name, for example, a so-called cleaning agent used for cleaning.

The disinfectant of the present invention is a disinfectant composed of a hypochlorous acid aqueous solution having an effective chlorine concentration of 2 to 2000 ppm by mass and a pH of 5.5 to 7.5, and the disinfectant including:
a metal salt of a carboxylic acid having 1 to 9 carbon atoms contained in the molecule and a compound having a triazole skeleton, and when an effective chlorine concentration in the disinfectant is C_{EC} (ppm by mass), a concentration of the metal salt of a carboxylic acid is C_{A} (ppm by mass), and a concentration of the compound having a triazole skeleton is C_{B} (ppm by mass), C_{A}/C_{EC} and C_{B}/C_{EC}, which are ratios of C_{A} and C_{B} to C_{EC}, are C_{A}/C_{EC} = 2.5 to 200 and C_{B}/C_{EC} = 1 to 60, respectively, and an excellent corrosion-inhibiting effect (an effect of suppressing generation of corrosion on a metal surface in contact) is exhibited.

As water to be a solvent of the hypochlorous acid aqueous solution, purified water, tap water, and the like can be used without particular limitation. The aqueous solution may be an aqueous solution using an aqueous solvent containing a water-soluble organic solvent such as alcohol in addition to water.

The effective chlorine concentration of the hypochlorous acid aqueous solution constituting the disinfectant of the present invention is preferably 10 to 1500 ppm by mass, and more preferably 30 to 1000 ppm by mass. The pH is more preferably 6.0 to 7.2. Further, the C_{A}/C_{EC} and the C_{B}/C_{EC} are preferably C_{A}/C_{EC} = 5 to 150 and C_{B}/C_{EC} = 2.5 to 50, particularly preferably C_{A}/C_{EC} = 10 to 75 and C_{B}/C_{EC} = 5 to 30, respectively.

The disinfectant of the present invention can contain foaming properties including metal ions exhibiting antibacterial properties, such as silver ions, zinc ions, and copper ions, and a carbonate, a hydrogen carbonate, and a double salt of a hydrogen carbonate and a carbonate, which are metal ion sources, as necessary, and the total amount C_{M} (ppm by mass) of these metal ions preferably satisfies the conditions represented by C_{M}/C_{EC} ≤ 0.35, and particularly preferably satisfies C_{M}/C_{EC} ≤ 0.25. In addition, various add-in materials and the like can be contained as long as the effects of the present invention are not impaired or the blending method is used. For example, in order to improve adhesion to an object to be disinfected, it is also possible to add a thickener to form a gel or paste. As the thickener, inorganic particles are preferably used, and inorganic particles having an average primary particle diameter of 5 nm or more and 100 nm or less are preferably used.

The disinfectant of the present invention can also be prepared by a method other than the method of the present invention described later. For example, when the concentrated stock solution is diluted, the component A and the component B may be separately added for preparation, or a mixture of the component A and the component B may be directly added to a hypochlorous acid aqueous solution having a predetermined effective concentration and pH, or the component A and the component B may be separately added to adjust them, regardless of whether or not the concentrated stock solution is used.

In addition, adding the component A and the component B at the time of diluting the concentrated stock solution means that the component A and the component B are not added in advance to the concentrated stock solution before dilution. That is, not only the case where the component A and the component B are added at the same time as the dilution of the concentrated stock solution, but also the case where the component A and the component B are added after a lapse of a certain period of time after the dilution of the concentrated stock solution.

The method for using the disinfectant of the present invention is not particularly limited, and for example, the disinfectant may be brought into contact with an object by spraying, coating, dipping, or the like. Specific examples of the method include a method in which a place to be disinfected is sprayed using a sprayer such as a trigger and then wiped off, a method in which an object to be disinfected is immersed in a disinfectant and then washed with water, a method in which a disinfective composition is atomized by an ultrasonic sprayer and sprayed into a space, a method in which a disinfectant is impregnated with a material that can be impregnated, such as a cloth or a nonwoven fabric, and the object is rubbed, and a method in which a disinfectant is applied to an object to be disinfected using a brush or a syringe and washed with water or wiped off.

In addition, by adding a surfactant to the disinfectant of the present invention, it can also be used as a disinfecting/cleaning agent. The amount of the surfactant is added so as to be 500 ppm by mass to 1% by mass with respect to the total amount of the hypochlorous acid aqueous solution to be prepared, but this may be blended in the corrosion inhibitor for a hypochlorous acid aqueous solution of the present invention, or may be blended in the hypochlorous acid aqueous solution. The kind of surfactant to be used is not particularly limited, but it is preferable to use a nonionic surfactant.

The disinfecting/cleaning agent contains hypochlorous acid having strong disinfection properties as an (disinfecting) active component, and has pH that is neutral or very close to neutral which is easy to handle, and also contains a surfactant, and thus has high cleaning power. Therefore, it is useful for disinfection in a wide range of fields such as hospitals, food processing plants, educational facilities, and nursing care facilities. In particular, since it has an excellent feature that it is difficult to corrode metal (difficult to cause rust on metal), which is not seen in conventional hypochlorous acid water - especially molecular type hypochlorous acid-based disinfective compositions, it can be used for articles containing metal, for example, articles containing corrosion-prone steel, cobalt chromium, nickel, silver, zinc, brass, and the like, in addition to articles containing plastic, rubber, tile, brick, cement, glass, wood, cloth, nonwoven fabric, vinyl, skin, ceramic, and the like. The disinfecting/cleaning agent of the present invention can be particularly suitably used as a disinfecting/cleaning agent for cleaning and/or disinfecting an article formed of steel, cobalt chromium, nickel, silver, zinc, brass, or the like, at least a part of which surface is easily corroded.

The method for using the disinfecting/cleaning agent is not particularly limited, and the disinfecting/cleaning agent may be brought into contact with an object by spraying, coating, dipping, or the like. Specific examples of the method include a method in which a place to be disinfected is sprayed using a sprayer such as a trigger and then wiped off, a method in which an object to be disinfected is immersed in a disinfecting/cleaning agent and then washed with water, a method in which a disinfective composition is atomized by an ultrasonic sprayer and sprayed into a space, a method in which a disinfecting/cleaning agent is impregnated with a material that can be impregnated, such as a cloth or a nonwoven fabric, and the object is rubbed, and a method in which a disinfecting/cleaning agent is applied to an object to be disinfected using a brush or a syringe and washed with water or wiped off. In addition, in a method of immersing an object to be disinfected in a disinfecting/cleaning agent, it is also possible to enhance a cleaning effect by using ultrasonic waves. Furthermore, the cleaning liquid may be used as a cleaning liquid when a wash dispenser used for cleaning and disinfecting a medical instrument is used.

### 3. Preparation method of the invention

The preparation method of the present invention is a method for preparing the disinfectant of the present invention, and includes a dilution step of diluting, with water or an aqueous solvent, a stock solution (concentrated stock solution) composed of a hypochlorous acid aqueous solution which has an effective chlorine concentration higher than the effective chlorine concentration of the disinfectant of the present invention which is a target product, has a pH of 3.0 to 7.5, and does not contain a metal carboxylate and a compound having a triazole skeleton, wherein the corrosion inhibitor for a hypochlorous acid aqueous solution of the present invention is added so that the C_{A}/C_{EC} is within a range of 2.5 to 200 and the C_{B}/C_{EC} is within a range of 1 to 60 at the time of dilution in the dilution step.

In addition, the effective chlorine concentration in the stock solution (concentrated stock solution) is not particularly limited as long as it is higher than the effective chlorine concentration of the present disinfectant as a target product, and is an effective chlorine concentration at which the disinfectant of the present invention can be prepared after dilution and addition of the corrosion inhibitor for a hypochlorous acid aqueous solution of the present invention (at a target effective chlorine concentration), but is preferably 100 ppm by mass to 3.0% by mass, and particularly preferably 100 ppm by mass to 1000 ppm by mass. In addition, as water to be a solvent of the stock solution, purified water, tap water, and the like can be used similarly to the disinfectant of the present invention, and an aqueous solvent containing a water-soluble organic solvent such as alcohol in addition to water can also be used.

Such a stock solution can be suitably produced by, for example, a method as described in Patent Literature 1. That is, the stock solution can be suitably produced by a method including the steps of an ion exchange step of mixing a raw material aqueous solution composed of an aqueous solution of a metal salt of hypochlorous acid and a weakly acidic ion exchange resin to perform ion exchange between metal ions and hydrogen ions, thereby generating molecular type hypochlorous acid dissolved in the mixed solution; and a separation step of separating a weakly acidic ion exchange resin from the mixed solution after the ion exchange step to obtain a target aqueous solution including an aqueous solution in which molecular hypochlorous acid is dissolved, in which in the ion exchange step, the amount ratio of the raw material aqueous solution and the weakly acidic ion exchange resin to be mixed is such an amount ratio that the ratio of the total ion exchange equivalent (E_{IE}) of the weakly acidic ion exchange resin to the total chemical equivalent (E_{MI}) of metal ions in the raw material aqueous solution: (E_{MI}/E_{IE}) is 0.05 or more and 0.5 or less, the liquid temperature at the time of mixing is 5°C or more and 40°C or less, and the mixing time is 10 minutes or more and 120 minutes or less.

The added amount of the corrosion inhibitor for a hypochlorous acid aqueous solution of the present invention is determined so that the C_{A}/C_{EC} falls within the range of 2.5 to 200 and the C_{B}/C_{EC} falls within the range of 1 to 60 after the dilution step according to the amount or concentration of the first and second active components (component A and component B) contained in the corrosion inhibitor for a hypochlorous acid aqueous solution of the present invention and the total amount of effective chlorine contained in the stock solution to be used. In addition, the amount of water or aqueous solvent to be used for dilution may be determined in consideration of the amount of the corrosion inhibitor for a hypochlorous acid aqueous solution of the present invention to be used so that the effective chlorine concentration in the target disinfectant is a desired concentration.

### Examples

Hereinafter, in order to specifically describe the present invention, examples and comparative examples is described, but the present invention is not limited thereto at all.

Abbreviations of raw materials used in Examples and Comparative Examples, preparation methods, and the like is described below. Specifically, the compounds used in Examples and Comparative Examples and their abbreviations are shown in the following 1 to 3, and a method for preparing a high-concentration (molecular type) hypochlorous acid aqueous solution used as a "concentrated stock solution" for preparing a hypochlorous acid aqueous solution-based disinfectant is described in the following 4.

1. First active component (component A): Metal carboxylate
   Sodium formate (manufactured by FUJIFILM Wako Pure Chemical Corporation)
   Calcium acetate monohydrate (manufactured by FUJIFILM Wako Pure Chemical Corporation)
   Sodium propionate (manufactured by FUJIFILM Wako Pure Chemical Corporation)
   Sodium hexanoate (manufactured by Tokyo Chemical Industry **Co.,** Ltd.)
   Sodium nonanoate (manufactured by FUJIFILM Wako Pure Chemical Corporation)
**2.** Second active component (component B): Compound having triazole skeleton
   Benzotriazole (manufactured by Tokyo Chemical Industry Co., Ltd.)
   1,2,3-triazole (manufactured by Tokyo Chemical Industry Co., Ltd.)
   1,2,4-triazole (manufactured by FUJIFILM Wako Pure Chemical Corporation)
3. Other components: Surfactant
   PGLE: Polyglyceryl laurate-10 (manufactured by Daicel Corporation)
4. Method for preparing (concentrated) stock solution

The aqueous solution was diluted with an aqueous NaClO solution (trade name: Neolax Super: supplier Shimada Shoten) ion-exchanged water having an effective chlorine concentration of 12.0 mass% to adjust the effective chlorine concentration to 11000 ppm, thereby preparing 2400 ml of a raw material aqueous solution. Next, 200 ml of a weakly acidic ion exchange resin Amberlite IRC-76(H⁺ form, manufactured by Organo Corporation) was weighed, the entire amount of the raw material aqueous solution was added, and the mixture was stirred for 20 minutes using a fluororesin stirring blade so that the weakly acidic ion exchange resin was uniformly dispersed, followed by mixing. During stirring, the pH of the mixture liquid was monitored and stirring was stopped when the pH decreased to reach 6.3. After completion of the stirring, the mixture was allowed to stand until the resin precipitated, and by decantation, a hypochlorous acid aqueous solution as a supernatant liquid was passed through the filter cloth of #200 so that the resin did not enter, and the concentrated stock solution was recovered in a polyethylene container. The liquid left at room temperature for 3 hours until the pH reached 4.8. The effective chlorine concentration of the concentrated stock solution after standing: C_{EC} was measured using an effective chlorine concentration measuring kit AQ-202 model (manufactured by SIBATA SCIENTIFIC TECHNOLOGY LTD.), and the result showed that the effective chlorine concentration was 9000 ppm. From the pH of the aqueous solution, most of hypochlorous acid is dissolved as molecular type hypochlorous acid.

In the measurement of the effective chlorine concentration using the effective chlorine concentration measuring kit AQ-202 model (manufactured by SIBATA SCIENTIFIC TECHNOLOGY LTD.), when the effective chlorine concentration: C_{EC} is expected to exceed 300 ppm from the relationship of the quantitative range, it is necessary to determine the effective chlorine concentration: C_{EC} of the aqueous solution to be evaluated (before dilution) by performing measurement on a measurement sample diluted to have a C_{EC} of 300 ppm or less using ion-exchanged water and multiplying the measured value by a dilution rate. In the above measurement, the measurement sample is adjusted at a dilution ratio of 50 times.

### Example 1

Preparation of corrosion inhibitor aqueous solution: 0.6 parts by mass (0.12 g) of calcium acetate monohydrate, 0.2 parts by mass (0.04 g) of benzotriazole, and 99.2 parts by mass (19.84 g) of tap water were stirred for 10 minutes until the mixture became uniform to prepare 100 parts by mass (20 g) of a corrosion inhibitor aqueous solution (m_{A}/m_{B} = 3.0).

Preparation of hypochlorous acid aqueous solution-based disinfectant: 4.5 parts by mass (0.9 g) of the concentrated stock solution (C_{EC}: 9000 ppm of molecular type hypochlorous acid aqueous solution) and 95.5 parts by mass (19.1 g) of tap water were mixed and stirred for 1 minute to prepare 100 parts by mass (20 g) of diluted hypochlorous acid aqueous solution. Next, the prepared diluted aqueous hypochlorous acid solution and the corrosion inhibitor aqueous solution were mixed at a mass ratio = 1 : 1 to prepare a hypochlorous acid aqueous solution-based disinfectant.

Evaluation of hypochlorous acid aqueous solution-based disinfectant: The obtained hypochlorous acid aqueous solution-based disinfectant was subjected to a corrosion test evaluation, a pH evaluation, a stability evaluation, and a disinfection evaluation. Details of the evaluation method and evaluation results are shown below.

### (1) Evaluation of corrosion test

In a 50 cc glass bottle containing 40 ml of a hypochlorous acid aqueous solution-based disinfectant (aqueous solution for evaluation), two steel balls having a diameter of 5 mm ("Eggs steel ball balls 5 mm (TAIHO TRADING Co., Ltd.)") were immersed. After a lapse of a predetermined time, the presence or absence of corrosion was visually confirmed, and hereinafter, evaluation was performed by AAA to C, and the evaluation result was AAA.
AAA: Corrosion is not confirmed even after 24 hours.
AA: Corrosion was confirmed in 6 hours or more and less than 24 hours
A: Corrosion was confirmed in 3 hours or more and less than 6 hours.
B: Corrosion was confirmed in 1 hour or more and less than 3 hours.
C: Corrosion was confirmed in less than 1 hour.

### (2) pH evaluation (evaluation of pH change before and after metal contact)

With respect to the hypochlorous acid aqueous solution-based disinfectant (evaluation aqueous solution) used in the corrosion test (1), the pH of the evaluation aqueous solution was measured at the two point in a state before immersion of the steel balls and during a period from immediately after preparation of the hypochlorous acid aqueous solution-based disinfectant to when 30 minutes elapsed (initial period) and after a lapse of one day from the start of immersion of the steel balls. As a result, the initial pH was 6.8, and the pH was 7.0 after 1 day. The measurement was performed using pH meter F-55 (manufactured by HORIBA, Ltd.).

### (3) Effective chlorine concentration (evaluation of stability during metal contact)

The effective chlorine concentration of the hypochlorous acid aqueous solution-based disinfectant (aqueous solution for evaluation) used in the corrosion test (1) was measured at the two point in a state before immersion of the steel ball, immediately after preparation of the hypochlorous acid aqueous solution-based disinfectant, and after a lapse of one day. As a result, the effective chlorine concentration immediately after the preparation was 200 ppm, and was 200 ppm without any change even after 1 day.

The effective chlorine concentration was measured using a water quality test paper (Nissan AquaCheck HC: measurable concentration; 600, 400, 200, 100, 50, 25, 0 ppm or Nissan Aqua Check 5: Measurable Concentration: 10, 4, 2, 1, 0.5, 0 ppm). In these methods, the effective chlorine concentration is measured by visually comparing the degree of coloration when the test paper is immersed in the solution with the color sample. For example, the description "200 to 100" means that a color state between 200 ppm and 100 ppm of the color sample is visually confirmed.

### (4) Disinfection properties evaluation

An alginate plate of 19 mm length × 57 mm width × 3 mm thickness was prepared using a dental alginate impression material (Tokuyama A-1α, manufactured by Tokuyama Dental Corporation). After 100 µl of saliva was applied to one surface of the alginate plate, the plate was lightly washed with water, and the alginate plate was immersed in 200 ml of a hypochlorous acid aqueous solution-based disinfectant (aqueous solution for evaluation) separately prepared in the same manner. After immersion for 30 seconds, the alginate plate was taken out, and the saliva-treated surface of the alginate plate was lightly pressed against the brain heart infusion medium to bring the saliva-treated surface into contact with the entire medium. The alginate plate was removed, and the bacteria were cultured in an incubator at 37°C for 1 week. Thereafter, the presence or absence of bacteria (colonies) was visually confirmed. As a result, no colonies were confirmed. As a reference, the same evaluation was performed using disinfected water in place of the evaluation aqueous solution, and as a result, colonies were confirmed, it was confirmed that the evaluation aqueous solution had disinfection properties (removing bacteria properties).

### Example 2 to 14

Preparation of corrosion inhibitor aqueous solution: A disinfectant composition was prepared by the same procedure as in Example 1 except that the kinds and/or amounts of the metal carboxylate and the triazole compound to be used and the amount of water to be used were changed as shown in Table 1.

Preparation and evaluation of hypochlorous acid aqueous solution-based disinfectant: The disinfectant was diluted in the same manner as in Example 1 except that the concentration of each component in the disinfectant was changed as shown in Table 2 by changing the amounts of the stock solution and diluted water to be used, and the total amount of the prepared diluted hypochlorous acid aqueous solution and the corrosion inhibitor aqueous solution was mixed at a mass ratio = 1 : 1 to prepare a hypochlorous acid aqueous solution based disinfectant. Thereafter, the obtained hypochlorous acid aqueous solution-based disinfectant was evaluated in the same manner as in Example 1. The results are shown together in Table 2. It is to be noted that from the effective chlorine amount, it is considered that all Examples have the same disinfection properties as in Example 1, and thus the evaluation is omitted, but Example 14 was evaluated, and it was confirmed that no colonies were generated as in Example 1. "↑" in the table means "the same as above", and C_{EC}, C_{A}, and C_{B} in Table 2 represent the effective chlorine concentration (ppm by mass), the A component concentration (ppm by mass), and the B component concentration (ppm by mass) in the hypochlorous acid aqueous solution-based disinfectant, respectively.

### [Table 1]

**(Table 1)**

| No. | | (A) Metal carboxylate | | (B) Triazole compound | | Water | m_{A}/m_{B} |
|---|---|---|---|---|---|---|---|
| | | Kind | Parts by mass | Kind | Parts by mass | Parts by mass | |
| | 1 | Calcium acetate | 0.6 | Benzotriazole | 0.2 | 99.2 | 3 |
| | 2 | ↑ | 0.2 | ↑ | 0.1 | 99.7 | 2 |
| | 3 | ↑ | 6 | ↑ | 2 | 92 | 3 |
| | 4 | ↑ | 0.2 | ↑ | 2 | 97.8 | 0.1 |
| | 5 | ↑ | 6 | ↑ | 0.1 | 93.9 | 60 |
| | 6 | ↑ | 6 | ↑ | 0.04 | 93.96 | 150 |
| | 7 | ↑ | 0.6 | 1,2,3-triazole | 0.2 | 99.2 | 3 |
| Example | 8 | ↑ | ↑ | 1,2,4-triazole | ↑ | ↑ | ↑ |
| | 9 | Sodium formate | ↑ | Benzotriazole | ↑ | ↑ | ↑ |
| | 10 | Sodium propionate | ↑ | ↑ | ↑ | ↑ | ↑ |
| | 11 | Sodium hexanoate | ↑ | ↑ | ↑ | ↑ | ↑ |
| | 12 | Sodium nonanoate | ↑ | ↑ | ↑ | ↑ | ↑ |
| | 13 | Calcium acetate | ↑ | ↑ | ↑ | ↑ | ↑ |
| | 14 | ↑ | ↑ | ↑ | ↑ | ↑ | ↑ |
| | 15 | ↑ | ↑ | ↑ | ↑ | ↑ | ↑ |
| Comparative Example 1 | | Calcium acetate | 0.6 | - | - | 99.4 | - |
| Comparative Example 2 | | - | - | Benzotriazole | 0.2 | 99.8 | - |

[Table 2]

**(Table 2)**

| | | Concentration and concentration ratios of each component in disinfectant | | | | | | | Evaluation results | | | | |
|---|---|---|---|---|---|---|---|---|---|---|---|---|---|
| | | C_{EC} [ppm] | C_{A} [ppm] | C_{B} [ppm] | Other components | | C_{A}/C_{EC} | C_{B}/C_{EC} | pH | | Effective chlorine concentration / ppm | | Evaluation of corrosion test |
| | | | | | Kind | ppm | | | Init. | After 1 day | Init. | After 1 day | |
| | 1 | 200 | 3000 | 1000 | - | - | 15 | 5 | 6.8 | 7.0 | 200 | 200 | AAA |
| | 2 | ↑ | 1000 | 500 | - | - | 5 | 2.5 | 6.6 | 6.5 | 200 | 200 | AA |
| | 3 | ↑ | 30000 | 10000 | - | - | 150 | 50 | 7.1 | 7.0 | 200 | 100~200 | AAA |
| | 4 | ↑ | 1000 | ↑ | - | - | 5 | 50 | 6.6 | 6.5 | 200 | 100~200 | AAA |
| | 5 | ↑ | 30000 | 500 | - | - | 150 | 2.5 | 7.1 | 7.0 | 200 | 200 | AA |
| | 6 | ↑ | 30000 | 200 | - | - | 150 | 1 | 7.0 | 7.0 | 200 | 200 | A |
| | 7 | ↑ | 3000 | 1000 | - | - | 15 | 5 | 7.0 | 6.5 | 200 | 100~200 | AAA |
| Example | 8 | ↑ | ↑ | ↑ | - | - | ↑ | ↑ | 7.1 | 7.1 | 200 | 200 | AAA |
| | 9 | ↑ | ↑ | ↑ | - | - | ↑ | ↑ | 6.6 | 6.6 | 200 | 200 | A |
| | 10 | ↑ | ↑ | ↑ | - | - | ↑ | ↑ | 6.9 | 7.1 | 200 | 200 | AAA |
| | 11 | ↑ | ↑ | ↑ | - | - | ↑ | ↑ | 6.9 | 7.0 | 200 | 200 | AAA |
| | 12 | ↑ | ↑ | ↑ | - | - | ↑ | ↑ | 6.8 | 6.9 | 200 | 200 | A |
| | 13 | 400 | ↑ | ↑ | - | - | 7.5 | 2.5 | 6.8 | 6.8 | 400 | 400 | AAA |
| | 14 | 100 | ↑ | ↑ | - | - | 30 | 10 | 6.9 | 7.0 | 100 | 100 | AAA |
| | 15 | 200 | ↑ | ↑ | PGLE | 1000 | 15 | 5 | 6.8 | 7.0 | 200 | 200 | AAA |
| Comparative Example 1 | | 200 | 3000 | - | - | - | 15 | - | 6.7 | 6.7 | 200 | 200 | B |
| Comparative Example 2 | | ↑ | - | 1000 | - | - | - | 5 | 6.8 | 3.3 | 200 | 25 | C |

As shown in Table 2, the disinfectant of the present invention prepared by the method for preparing a disinfectant of the present invention using the corrosion inhibitor for a hypochlorous acid aqueous solution of the present invention has excellent corrosion prevention property with A to AAA in the corrosion test evaluation, and the effective chlorine concentration is hardly reduced even after preparation. For example, even in a state of being in contact with a metal, the effective chlorine concentration effective for disinfection can be maintained for about one day or more. In addition, it is possible to maintain neutrality without lowering the pH even when it comes into contact with a metal, so that it can be handled safely.

### Example 15

A hypochlorous acid aqueous solution disinfectant was prepared and evaluated in a similar manner to Example 1 except that the surfactant PGLE was added to the hypochlorous acid aqueous solution-based disinfectant at a concentration of 1000 ppm by mass at the time of dilution. The results are shown in Table 2. As shown in Table 2, even when a surfactant is added to obtain a disinfecting/cleaning agent, the agent has excellent corrosion prevention property, the effective chlorine concentration is hardly reduced even after preparation, and the effective chlorine concentration effective for disinfection can be maintained for about one day or more.

### Comparative Example 1

A disinfectant composition was prepared in the same procedure as in Example 1 except that calcium acetate monohydrate: 0.12 g and tap water: 19.88 g were stirred for 10 minutes until the mixture became uniform to prepare a corrosion inhibitor aqueous solution, and the same evaluation was performed. The results are shown in Table 2. In Comparative Example 1, since benzotriazole was not used, the corrosion-inhibiting effect could not be obtained satisfactorily.

### Comparative Example 2

A disinfectant composition was prepared in the same procedure as in Example 1 except that benzotriazole: 0.04 g and tap water: 19.96 g were stirred for 10 minutes until the mixture became uniform to prepare a corrosion inhibitor aqueous solution, and the same evaluation was performed. The results are shown in Table 2. In Comparative Example 2, since a metal carboxylate was not used, the corrosion-inhibiting effect could not be obtained satisfactorily, and since the pH could not be maintained around neutrality, a decrease in pH and a decrease in effective chlorine concentration were observed after one day.

## Claims

1. A corrosion inhibitor for a hypochlorous acid aqueous solution for imparting a corrosion-inhibiting effect to a hypochlorous acid aqueous solution, the corrosion inhibitor comprising:
a first active component composed of a metal salt of a carboxylic acid having 1 to 9 carbon atoms contained in a molecule and a second active component composed of a compound having a triazole skeleton at a ratio such that the ratio: m_{A}/m_{B} of an amount of the first active component: m_{A} (parts by mass) to an amount of the second active component: m_{B} (parts by mass) is within a range of 0.05 to 200.

2. The corrosion inhibitor for a hypochlorous acid aqueous solution according to claim 1, wherein
the first active component is composed of at least one selected from the group consisting of a metal salt of acetic acid, a metal salt of propionic acid, a metal salt of butyric acid, and a metal salt of succinic acid, and
the second active component is composed of at least one compound selected from the group consisting of benzotriazole, 4-methylbenzotriazole, 5-methylbenzotriazole, 1,2,3-triazole, and 1,2,4-triazole.

3. A disinfectant being composed of a hypochlorous acid aqueous solution having an effective chlorine concentration of 2 to 2000 ppm by mass and a pH of 5.5 to 7.5, the disinfectant comprising:
a metal salt of a carboxylic acid having 1 to 9 carbon atoms contained in a molecule and a compound having a triazole skeleton,
wherein when the effective chlorine concentration in the disinfectant is C_{EC} (ppm by mass), the concentration of the metal salt of a carboxylic acid is C_{A} (ppm by mass), and the concentration of the compound having a triazole skeleton is C_{B} (ppm by mass), C_{A}/C_{EC} is 2.5 to 200 and C_{B}/C_{EC} is 1 to 60.

4. A method for preparing the disinfectant according to claim 3, the method comprising:
a dilution step of diluting, with water or an aqueous solvent, a stock solution composed of a hypochlorous acid aqueous solution which has an effective chlorine concentration higher than the effective chlorine concentration of the disinfectant which is a target product, has a pH of 3.0 to 7.5, and does not contain a metal carboxylate and a compound having a triazole skeleton,
wherein the corrosion inhibitor for a hypochlorous acid aqueous solution according to claim 1 or 2 is added so that the C_{A}/C_{EC} is within a range of 2.5 to 200 and the C_{B}/C_{EC} is within a range of 1 to 60 at the time of dilution in the dilution step.
